# FASCICULE DE BREVET EUROPEEN

(11) **EP 2 240 294 B1**
(45) Date de publication et mention de la délivrance du brevet: **04.07.2012**
(21) Numéro de dépôt: 08870211.3
(22) Date de dépôt: 16.12.2008
(51) Int. Cl.: B23K 26/14, B23K 26/16, B23K 26/32, F23D 14/54, F23D 14/58, H01S 3/02

(54) **PROCEDE DE SOUDAGE LASER UTILISANT UNE BUSE APTE A STABILISER LE KEYHOLE**
LASERSCHWEIßVERFAHREN MIT HILFE EINER DÜSE, DIE IN DER LAGE IST, DAS SCHLÜSSELLOCH ZU STABILISIEREN
METHOD FOR LASER WELDING USING A NOZZLE CAPABLE OF STABILISING THE KEYHOLE

(30) Priorité: 08.01.2008 FR 0850074
(43) Date de publication de la demande: 20.10.2010
(73) Titulaire: L'Air Liquide Société Anonyme pour l'Etude et l'Exploitation des Procédés Georges Claude, 75007 Paris (FR)
(72) Inventeur: CHOUF, Karim, F-95160 Montmorency (FR); LEFEBVRE, Philippe, F-78250 Meulan (FR)
(74) Mandataire: Pittis, Olivier
(86) Numéro de dépôt international: PCT/FR2008/052318
(87) Numéro de publication internationale: WO 2009/087325

(56) Documents cités:
- JP-A- 2003 181 676
- US-A- 5 148 446
- US-A- 5 496 985
- US-A1- 2007 119 837
- US-A1- 2007 210 040

## Description

L'invention porte sur un procédé de soudage laser utilisant une buse conçue pour, adaptée et conformée pour être utilisée en soudage par faisceau laser, plus simplement appelée « buse laser » conformément an preambule de la revendication 1 (voir par exemple JP 2003/181676), laquelle à une forme particulière permettant de mieux contrôler l'hydrodynamique du bain de métal liquide, lorsqu'elle est mise en oeuvre dans un procédé de soudage par faisceau laser en étant traversée par un faisceau laser, d'une part, et par du gaz, d'autre part.

Le soudage par faisceau laser est un procédé bien connu et largement utilisé au plan industriel pour assembler différents matériaux, tels que les aciers au carbone, les aciers inoxydables, l'aluminium et les alliages légers...

De manière schématique, pour mettre en oeuvre un procédé de soudage laser, on utilise une source ou générateur laser pour générer un faisceau laser qui est acheminé par une fibre optique ou par d'autres moyens optiques, tel que miroirs, lentilles... jusqu'à une ou plusieurs pièces à souder. L'énergie du faisceau permet de fondre le matériau constitutif des pièces et obtenir ainsi, après refroidissement, un cordon de soudure entre les pièces à souder.

Afin d'éviter la contamination du cordon de soudage par des impuretés atmosphériques, il est usuel de mettre en oeuvre une protection gazeuse permettant de protéger la zone de soudage. Le type de gaz de protection choisi dépend notamment de la nature du matériau constitutif des pièces à souder mais des gaz, tels que l'hélium, l'argon, l'azote, le CO₂, l'oxygène, l'hydrogène (dans une certaine mesure) et leurs mélanges sont classiquement utilisés.

Pour délivrer le gaz de protection et le faisceau laser, il est habituel d'utiliser une buse, couramment appelée « buse laser ».

Les buses laser utilisées sur les machines de soudage laser sont classiquement de forme cylindrique, conique ou tronconique et sont percées en leur centre d'un passage central qui est traversé par le faisceau laser et au sein duquel le gaz de protection est introduit de manière à être distribué au dessus de la zone de soudage et coaxialement au faisceau laser.

Ce type de buse permet de distribuer le gaz de protection au voisinage de la zone à d'interaction entre le faisceau laser et le matériau à souder et de l'inerter. L'inertage de cette zone rend efficace le couplage entre le faisceau laser et la matière, tout en protégeant le bain de métal en fusion des pollutions atmosphériques.

Toutefois, usuellement, les écoulements de gaz sont laminaires et lents. En effet, le jet de gaz distribué par ce type de buse n'exerce pas de force dynamique sur le bain de métal en fusion et il n'affecte pas les écoulements hydrodynamiques du bain de métal en fusion se formant durant le soudage.

Ce type d'écoulements lents conduit à des résultats de soudage satisfaisants dans des conditions standards d'utilisation. Cependant, avec ce type découlements, il existe de nombreuses configurations de soudage impossibles à souder par laser, par exemple le soudage laser d'empilements de plusieurs tôles revêtues de zinc ou analogue, avec un jeu nul entre elles.

L'invention vise à proposer un procédé de soudage amélioré mettant en oeuvre une buse de soudage particulière, c'est-à-dire apte à et conçue pour générer un jet de gaz dynamique qui, pendant le soudage laser proprement dit, interagit mécaniquement avec le bain de métal en fusion, et permet par ailleurs de mieux contrôler les écoulements hydrodynamiques du bain et donc l'efficacité du procédé de soudage par faisceau laser.

L'invention vise également à proposer un procédé de soudage laser permettant d'obtenir, selon le cas, une meilleure pénétration et/ou une meilleure qualité de soudage qu'un procédé classique, notamment une meilleure qualité métallurgique, et/ou permettant d'obtenir une meilleure évacuation des vapeurs métalliques émises lors du soudage, notamment les vapeurs de zinc lors du soudage de tôles revêtues, et/ou permettant de souder des configurations de soudage réputées difficiles, comme les empilements de tôles, voire à augmenter la vitesse de soudage lors du soudage de certains assemblages.

La solution de l'invention est un procédé de soudage par faisceau laser mettant en oeuvre une buse de soudage par faisceau laser conformément à la revendication 1.

En effet, utiliser une telle buse de soudage laser permet de générer un jet de gaz dynamique capable d'interagir mécaniquement avec le capillaire de soudage et le bain de métal en fusion de manière à repousser la paroi arrière du capillaire qui supporte le bain du fusion, d'élargir l'embouchure du capillaire et de modifier les écoulements hydrodynamiques du bain. En fait, le jet de gaz délivré par la buse laser induit une ouverture de l'embouchure du capillaire d'au moins deux fois le diamètre du faisceau laser sur une profondeur d'au moins 1 fois le diamètre du faisceau.

Selon le cas, le procédé de l'invention peut comprendre l'une ou plusieurs des caractéristiques suivantes :
- la buse comporte de 2 à 10 passages internes, de préférence de 3 à 5 passages internes.
- le canal axial de la buse est conformé pour permettre le passage d'un faisceau laser.
- les passages internes de la buse sont percés à équidistance du canal axial.
- le diamètre des passages internes est compris entre 0.5 mm et 5 mm, de préférence entre 1.5 mm et 2.5 mm.
- les passages internes de la buse sont orientés vers l'axe (X-X) de la buse.
- l'inclinaison des passages internes de la buse est comprise entre 10° et 80° par rapport au plan horizontal, de préférence encore entre 30° et 60°, de préférence encore entre 40° et 50°.
- la longueur des passages internes de la buse est comprise entre 5 mm et 200 mm, de préférence entre 20 et 100 mm, de préférence encore entre 30 de 50 mm. La longueur des passages internes est la distance parcourue par chaque passage interne entre la surface supérieure et la surface inférieure du corps de buse.
- la surface supérieure du corps de buse comporte un dispositif de fixation permettant la fixation de la buse sur un support, en particulier sur une machine laser.
- la buse est fixée sur une machine de soudage par faisceau laser.
- on fait passer un faisceau laser dans le canal axial de la buse et on fait passer un gaz ou un mélange gazeux dans les passages internes de la buse.
- on utilise un gaz choisi parmi l'hélium, l'argon, l'azote, le dioxyde de carbone, l'oxygène, l'air purifié et les mélanges de ces gaz.
- on soude un empilement de plusieurs tôles. -
- on soude plusieurs tôles revêtues.
- on soude plusieurs tôles revêtues de zinc.
- le faisceau laser est généré par un générateur de faisceau laser de type CO₂, Nd - YAG, à diodes ou à fibres d'ytterbium.

Comme on le comprendra mieux au vu des explications suivantes données, à titre illustratif, en références aux figures annexées, la présente invention repose sur une buse laser dont le corps 1 est de conception « semi axiale » possédant un canal axial 2 pour le faisceau laser et plusieurs passages 3 d'injection de gaz équidistants dudit canal 2 axial. Les points d'impact des différents jets gazeux distribués par lesdits passages 3 de gaz sont orientés au voisinage direct de la zone d'interaction avec le faisceau laser.

Dit autrement, la buse laser utilisée dans le procédé de l'invention est formée d'un corps 1 de buse d'axe X-X qui comprend une surface supérieure 6, une surface inférieure 7 et une paroi périphérique 5 de forme générale tronconique et s'étendant entre lesdites surfaces supérieure 6 et inférieure 7.

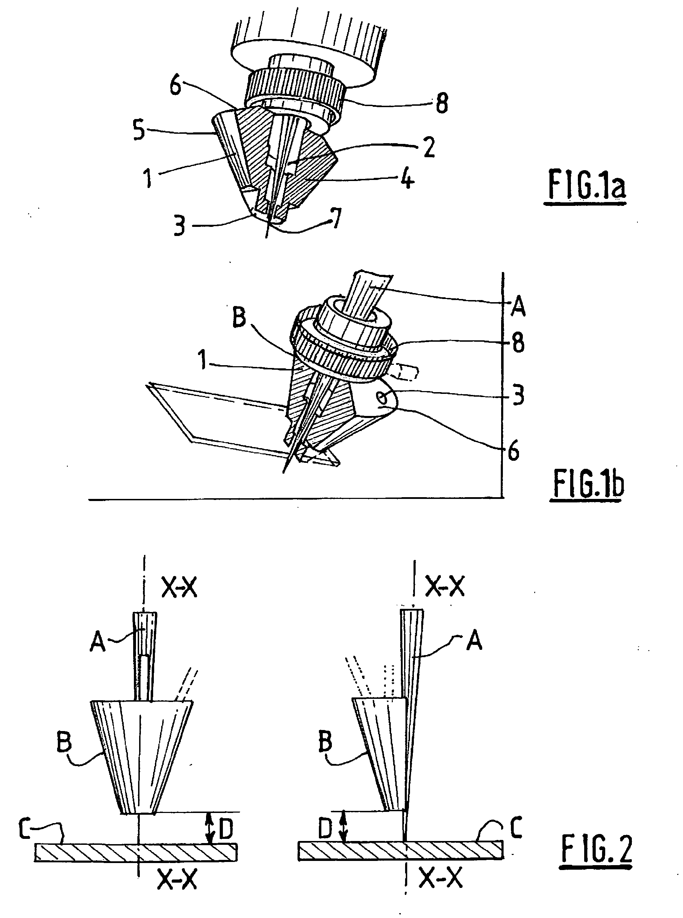

Comme montré en Figures 1a et 1b, un évidement 2 axial s'étend entre les surfaces supérieure 6 et inférieure 7 du corps 1 de buse. Cet évidement 2 est aménagé dans la paroi 5 périphérique du corps 1 de buse, avantageusement dans une partie plane de cette paroi 5 formant une paroi diamétrale 4. Cet évidement 2 forme un canal ouvert vers l'extérieur sur toute sa longueur, c'est-à-dire positionné en retrait par rapport à la surface 4 diamétrale plane de la paroi périphérique 5 du corps 1 de buse et dont l'intérieur communique sur toute sa longueur avec l'atmosphère ambiante.

L'évidement 2 est dimensionné et adapté pour être traversé par le faisceau laser dans le sens allant de la surface supérieure 6 à la surface inférieure 7.

Plusieurs passages 3 internes servant à véhiculer du gaz sont percés au travers du corps 1 de buse entre les surfaces supérieure 6 et inférieure 7.

Les passages internes 3 peuvent être orientés vers l'axe X-X de la buse.

Les jets de gaz délivrés par ces passages 3 permettent de contrôler le procédé de soudage laser en exerçant une pression dynamique sur le bain de métal en fusion et le capillaire de vapeur ou *keyhole.*

Un mode de réalisation d'une buse utilisée dans un procédé selon l'invention est représenté sur la FIG. 1. Cette buse est « semi axiale », c'est-à-dire qu'elle est de forme générale tronconique sur seulement une demi-circonférence et présente une paroi plane 4 agencée au niveau de son diamètre, encore appelée paroi diamétrale 4, conformément à l'invention.

De préférence, les passages 3 d'injection de gaz sont positionnés de manière symétrique le long d'une demi-couronne autour du passage axial 2. Les diamètres des orifices sont compris entre 0.5 mm et 5 mm, de préférence 1.5 mm à 2.5 mm. Le nombre de passages 3 d'injection est compris entre 1 et 10, de préférence entre 3 et 5.

L'inclinaison des passages 3 d'injection est comprise entre 10° et 80° par rapport à un plan horizontal perpendiculaire à l'axe X-X de la buse, de préférence entre 40° et 50°. La longueur des passages d'injection 3 est comprise entre 5 mm et 200 mm, de préférence 30 à 50 mm.

La surface supérieure 6 du corps de buse 1 comporte un dispositif de fixation 8 permettant la fixation de la buse sur un support, en particulier sur une machine laser. Le dispositif de fixation 8 peut être par exemple une partie ou une baguette taraudée surmontant la surface supérieure 6 du corps de buse 1 et apte à venir se raccorder, par exemple se visser, à l'extrémité d'un chemin optique ou analogue véhiculant le faisceau laser depuis un générateur laser jusqu'à la buse.

Comme représenté sur la FIG. 2, la buse B « semi axiale » est localisé à proximité immédiate du faisceau laser A, tout en étant positionné au dessus de la tôle C à souder, à une hauteur D de 1 mm à 40 mm, de préférence 5 mm à 10mm.

Le centrage de la buse B par rapport au faisceau laser A peut se faire de deux manières, à savoir :
- utilisation d'une plaque pré-percée d'un trou de diamètre inférieur à 1mm dans lequel on vient positionner le faisceau laser de repérage (généralement de type He/Ne) parfaitement aligné sur le faisceau laser de puissance (graphe 1 bis).
- utilisation d'une pointe rigide (généralement en tungstène) que l'on glisse dans le canal d'injection du gaz. Le faisceau laser est alors positionné au niveau de l'extrémité de la pointe rigide.

Généralement, les passages de gaz 3 sont répartis de manière symétriques par rapport à l'axe de déplacement du faisceau laser A, lors d'un processus de soudage linéaire.

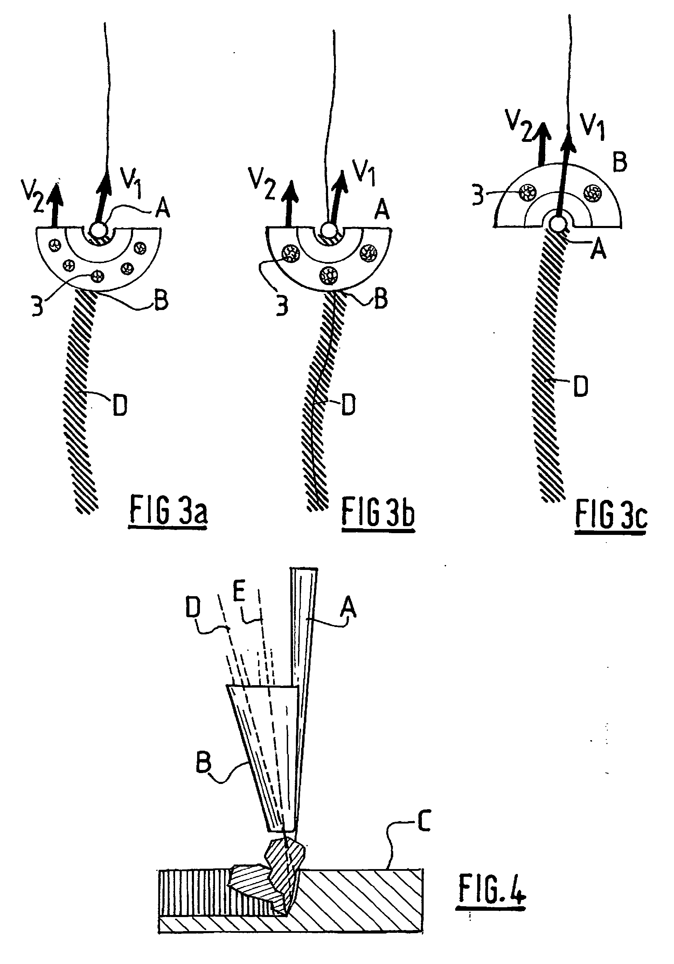

Néanmoins, il s'avère que, lorsque le procédé de soudage laser nécessite un léger changement de direction (trajectoire de soudage non linéaire), il n'est pas nécessaire de repositionner la buse B perpendiculairement à la trajectoire. Les nombreux passages d'injection 3 de la buse semi axiale B stabilisent le procédé de soudage malgré la dissymétrie du déplacement. Ceci est schématisé en FIG. 3 qui est une vue de dessus de plusieurs buses B à 5 passages d'injection 3 (Fig. 3a), 3 canaux d'injection (Fig. 3b) et 2 canaux d'injection (Fig. 3c). Le vecteur V1 correspond à la vitesse du faisceau laser A et le vecteur V2 représente celui de la buse B. La buse B permet des changements de direction de la trajectoire de soudage, c'est à dire des valeurs d'angles entre les vecteur V1 et V2, de l'ordre de ±1° à ±40°, de préférence ±5° à ±20°.

Les jets de gaz issus des passages 3 peuvent être orientés vers le front avant du capillaire, avec un positionnement de la buse B au dessus de la surface du bain de fusion (Fig. 3a et 3b), mais les jets peuvent être aussi orientés vers la paroi arrière du capillaire, directement sur la bain de métal en fusion (Fig. 3c).

Tous les gaz usuellement utilisés pour le soudage laser peuvent être utilisés avec cette buse B, tels que l'hélium, l'argon, l'azote, dioxyde de carbone, l'oxygène, l'air purifié et tous les mélanges possibles entre ces gaz.

Les débits de gaz injectés dans chacun des orifices peuvent varier indépendamment les uns des autres entre 1 l/min et 50 l/min, de préférence 10 à 25 l/min.

L'axe d'un jet de gaz est généralement caractérisé par l'axe du canal d'injection 3 de la buse B. L'intersection des axes des jets et du faisceau laser A incident se fait préférentiellement à la surface de la tôle à souder. Généralement, cette configuration fonctionne bien mais elle peut être déclinée suivant l'application et l'effet dynamique désirer sur le capillaire ou le bain de métal en fusion.

Ainsi, il est possible de faire se rencontrer certain des jets de gaz de la buse au niveau de la surface de la tôle, et d'autre jets à un niveau plus bas dans le capillaire de soudage, en dessous de la surface de la tôle. Cette technique permet entre autre d'améliorer la pénétration du cordon et d'améliorer sa qualité en permettant une meilleure évacuation des vapeurs métalliques (cf. FIG. 4).

L'orientation des passages 3 de gaz est à choisir selon le résultat désiré.

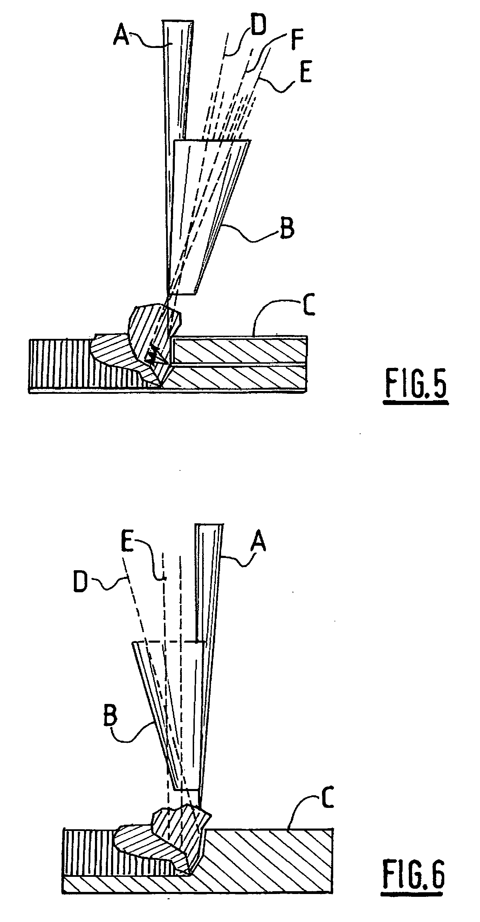

Par exemple, en choisissant judicieusement leurs orientations, il est possible de repousser le bain de métal en fusion loin du front avant du capillaire de manière à allonger l'embouchure du capillaire, longitudinalement au déplacement. Cela permet une meilleure évacuation de la vapeur métallique, résultante du procédé de soudage laser hors du capillaire. Cela améliore la qualité métallurgique des soudures et augmente légèrement certaines vitesses de soudage (~10%). Ainsi, de nouvelles configurations de soudage laser deviennent réalisables avec ce type de buse, tel le soudage laser de tôles revêtues (zinc ou autre) positionnée en empilement avec un jeu nul entre les tôles. En effet, l'allongement de l'embouchure du capillaire permet une meilleure évacuation des vapeurs de zinc initialement localisée à l'interface des tôles empilées (voir FIG. 5).

Il est aussi possible d'exercer une force dynamique plus ou moins importante directement sur le bain de métal en fusion pour modifier la forme et la nature des écoulements dans ce dernier. Ceci engendre alors une modification des échanges thermiques convectifs et des isotherme dans la soudure. Cela permet un élargissement du cordon accompagné d'une légère diminution de la pénétration.

Un des jets peut aussi directement venir frapper le front avant du capillaire quelques millimètre en dessous de la surface de la tôle, typiquement de 1 mm à 3 mm suivant l'épaisseur de la tôle, alors que les autres jets de gaz sont dirigés verticalement et participent à la pénétration du capillaire et du cordon (cf. FIG. 6).

Le choix de l'orientation des passages 3 peut se faire empiriquement en usinant plusieurs buses dont les canaux présentent des orientations différentes et en testant ces buses en soudage laser.

Le diamètre de chaque passage 3 internes peut être égal sur toute la longueur de chaque passage ou alors varier. Par exemple, le diamètre de l'orifice d'entrée de chaque passage 3 situé sur la surface supérieure 6 peut être supérieur au diamètre de sortie situé sur la surface inférieure 7 de la buse.

De même, les passages 3 ou leurs orifices d'entrée ou de sortie peuvent être identiques les uns par rapport aux autres, ou alors être différents, c'est-à-dire que par exemple un passage 3 peut avoir un diamètre supérieur au diamètre(s) des autres passages 3.

Le corps de buse est préférentiellement plein et est formé d'un métal ou alliage métallique, de préférence en un alliage de cuivre ou de laiton.

A titre d'exemple non limitatif, la buse peut avoir une hauteur de 2 à 30 cm, et un diamètre maximum de 1 à 15 cm mesuré par exemple au niveau de sa surface diamétrale plane 4.

La buse utilisée dans le procédé de l'invention est utilisable pour souder des configurations variées, notamment des empilements de tôles, et des matériaux variés, notamment les tôles revêtues de zinc. Elle est donc particulièrement adaptée à une utilisation dans le domaine de la fabrication de véhicules automobiles.

Le procédé de l'invention peut être mise en oeuvre en installant la buse de soudage laser sur une machine de soudage automatique.

## Revendications

1. Procédé de soudage par faisceau laser mettant en oeuvre une buse (B) de soudage par faisceau laser (A) formée d'un corps de buse (1) d'axe (X-X) comprenant au moins une surface supérieure (6), une surface inférieure (7) et une paroi périphérique (5) et plusieurs passages internes (3) percés au travers du corps de buse (1) entre les surfaces supérieure et inférieure (6, 7), **caractérisé en ce qu'**on met en oeuvre une buse (B) comprenant :
- un évidement axial (2) s'étendant entre les surfaces supérieure (6) et inférieure (7) du corps de buse (1), aménagé dans la paroi périphérique (5) du corps de buse (1) de manière à former un canal externe en retrait par rapport à la surface de ladite paroi périphérique (5), le corps de buse (1) ayant une forme générale semi-tronconique et la paroi périphérique (5) dudit corps de buse (1) comprenant une surface périphérique plane (4) au sein de laquelle est aménagé l'évidement axial (2) formant canal externe.

2. Procédé selon la revendication 1, **caractérisé en ce que** la buse (B) comporte de 2 à 10 passages internes (3), de préférence de 3 à 5 passages internes (3).

3. Procédé selon l'une des revendications 1 ou 2, **caractérisé en ce que** le canal axial (2) de la buse est conformé pour permettre le passage d'un faisceau laser (A).

4. Procédé selon l'une des revendications 1 à 3, **caractérisé en ce que** les passages internes (3) de la buse sont percés à équidistance du canal axial (2).

5. Procédé selon l'une des revendications 1 à 4, **caractérisé en ce que** le diamètre des passages internes (3) est compris entre 0.5 mm et 5 mm, de préférence entre 1.5 mm et 2.5 mm.

6. Procédé selon l'une des revendications 1 à 5, **caractérisé en ce que** les passages internes (3) de la buse sont orientés en direction de l'axe (X-X) de la buse.

7. Procédé selon l'une des revendications 1 à 6, **caractérisé en ce que** l'inclinaison des passages internes (3) de la buse (B) est comprise entre 10° et 80° par rapport au plan horizontal, de préférence encore entre 30° et 60°.

8. Procédé selon l'une des revendications 1 à 7, **caractérisé en ce que** la longueur des passages internes (3) de la buse (B) est comprise entre 5 mm et 200 mm, de préférence entre 20 et 100 mm.

9. Procédé selon l'une des revendications 1 à 8, **caractérisé en ce qu'**on fait passer un faisceau laser dans le canal axial (2) de la buse et on fait passer un gaz ou un mélange gazeux dans les passages internes (3) de la buse.

10. Procédé de soudage selon l'une des revendications 1 à 9, **caractérisé en ce qu'**on utilise un gaz choisi parmi l'hélium, l'argon, l'azote, le dioxyde de carbone, l'oxygène, l'air purifié et les mélanges de ces gaz.

11. Procédé de soudage selon l'une des revendications 1 à 10, **caractérisé en ce qu'**on soude un empilement de plusieurs tôles, particulier des tôles revêtues de zinc.

## Claims

1. Laser beam welding process employing a nozzle (B) for welding by laser beam (A), the nozzle being formed of a nozzle body (1) which has an axis (X-X) and comprises at least an upper surface (6), a lower surface (7) and a peripheral wall (5) and a plurality of internal passages (3) drilled through the nozzle body (1) between the upper and lower surfaces (6, 7), **characterised in that** a nozzle (B) is employed which comprises:
- an axial cut-out (2) which extends between the upper surface (6) and lower surface (7) of the nozzle body (1) and is provided in the peripheral wall (5) of the nozzle body (1) so as to form an external channel which is recessed relative to the surface of said peripheral wall (5), the nozzle body (1) having a semi-frustoconical shape overall and the peripheral wall (5) of said nozzle body (1) comprising a planar peripheral surface (4) in which the axial cut-out (2) forming an external channel is provided.

2. Process according to claim 1, **characterised in that** the nozzle (B) comprises from 2 to 10 internal passages (3), preferably from 3 to 5 internal passages (3).

3. Process according to either claim 1 or claim 2, **characterised in that** the axial channel (2) of the nozzle is adapted to allow a laser beam (A) to pass through.

4. Process according to any one of claims 1 to 3, **characterised in that** the internal passages (3) of the nozzle are drilled equidistant from the axial channel (2).

5. Process according to any one of claims 1 to 4, **characterised in that** the diameter of the internal passages (3) is between 0.5 mm and 5 mm, preferably between 1.5 mm and 2.5 mm.

6. Process according to any one of claims 1 to 5, **characterised in that** the internal passages (3) of the nozzle are oriented in the direction of the axis (X-X) of the nozzle.

7. Process according to any one of claims 1 to 6, **characterised in that** the inclination of the internal passages (3) of the nozzle (B) is between 10° and 80° relative to the horizontal plane, more preferably between 30° and 60°.

8. Process according to any one of claims 1 to 7, **characterised in that** the length of the internal passages (3) of the nozzle (B) is between 5 mm and 200 mm, preferably between 20 and 100 mm.

9. Process according to any one of claims 1 to 8, **characterised in that** a laser beam is made to pass through the axial channel (2) of the nozzle and a gas or a gas mixture is made to pass through the internal passages (3) of the nozzle.

10. Welding process according to any one of claims 1 to 9, **characterised in that** a gas selected from among helium, argon, nitrogen, carbon dioxide, oxygen, purified air and mixtures of these gases is used.

11. Welding process according to any one of claims 1 to 10, **characterised in that** a stack of a plurality of metal sheets, in particular zinc-coated metal sheets, is welded.

## Patentansprüche

1. Laserstrahlschweißverfahren, bei dem eine Düse (B) zum Schweißen mittels Laserstrahl (A) verwendet wird, die aus einem Düsenkörper (1) mit der Achse (X-X) gebildet wird, der mindestens eine Oberseite (6), eine Unterseite (7) und eine Umfangswand (5) und mehrere innere Durchgänge (3), die durch den Düsenkörper (1) zwischen der Oberseite und Unterseite (6, 7) gebohrt sind, umfasst, **dadurch gekennzeichnet, dass** eine Düse (B) verwendet wird, die Folgendes umfasst:
- eine axiale Aussparung (2), die zwischen der Oberseite (6) und Unterseite (7) des Düsenkörpers (1) verläuft und in der Umfangswand (5) des Düsenkörpers (1) derart angeordnet ist, dass sie einen äußeren Kanal zurückgesetzt bezogen auf die Fläche der Umfangswand (5) bildet, wobei der Düsenkörper (1) eine allgemeine halbkegelstumpfförmige Form aufweist und die Umfangswand (5) des Düsenkörpers (1) eine ebene periphere Fläche (4) umfasst, innerhalb der die axiale Aussparung (2), die den äußeren Kanal bildet, vorgesehen ist.

2. Verfahren nach Anspruch 1, **dadurch gekennzeichnet, dass** die Düse (B) 2 bis 10 innere Durchgänge (3) aufweist, vorzugsweise von 3 bis 5 innere Durchgänge (3).

3. Verfahren nach einem der Ansprüche 1 oder 2, **dadurch gekennzeichnet, dass** der axiale Kanal (2) der Düse angepasst wird, um das Durchleiten eines Laserstrahls (A) zu ermöglichen.

4. Verfahren nach einem der Ansprüche 1 bis 3, **dadurch gekennzeichnet, dass** die inneren Durchgänge (3) der Düse im gleichen Abstand zum axialen Kanal (2) gebohrt werden.

5. Verfahren nach einem der Ansprüche 1 bis 4, **dadurch gekennzeichnet, dass** der Durchmesser der inneren Durchgänge (3) zwischen 0,5 mm und 5 mm, vorzugsweise zwischen 1,5 mm und 2,5 mm, liegt.

6. Verfahren nach einem der Ansprüche 1 bis 5, **dadurch gekennzeichnet, dass** die inneren Durchgänge (3) der Düse in Richtung der Achse (X-X) der Düse ausgerichtet werden.

7. Verfahren nach einem der Ansprüche 1 bis 6, **dadurch gekennzeichnet, dass** die Neigung der inneren Durchgänge (3) der Düse (B) zwischen 10° und 80° bezogen auf die horizontale Ebene, bevorzugter zwischen 30° und 60°, beträgt.

8. Verfahren nach einem der Ansprüche 1 bis 7, **dadurch gekennzeichnet, dass** die Länge der inneren Durchgänge (3) der Düse (B) zwischen 5 mm und 200 mm, vorzugsweise zwischen 20 und 100 mm, beträgt.

9. Verfahren nach einem der Ansprüche 1 bis 8, **dadurch gekennzeichnet, dass** ein Laserstrahl durch den axialen Kanal (2) der Düse geleitet wird und ein Gas oder ein Gasgemisch durch die inneren Durchgänge (3) der Düse geleitet wird.

10. Schweißverfahren nach einem der Ansprüche 1 bis 9, **dadurch gekennzeichnet, dass** ein Gas ausgewählt aus Helium, Argon, Stickstoff, Kohlendioxid, Sauerstoff, gereinigter Luft und Gemischen aus diesen Gasen verwendet wird.

11. Schweißverfahren nach einem der Ansprüche 1 bis 10, **dadurch gekennzeichnet, dass** ein Stapel aus mehreren Blechen, insbesondere aus zinkbeschichteten Blechen, verschweißt wird.
